# EUROPÄISCHE PATENTSCHRIFT

(11) **EP 2 034 227 B1**
(45) Veröffentlichungstag und Bekanntmachung des Hinweises auf die Patenterteilung: **24.04.2013**
(21) Anmeldenummer: 08104838.1
(22) Anmeldetag: 23.07.2008
(51) Int. Cl.: F16L 3/10, F16L 55/035, F16L 59/135

(54) **Rohrschelle**
Pipe clamp
Collier de serrage

(30) Priorität: 04.09.2007 DE 102007000484
(43) Veröffentlichungstag der Anmeldung: 11.03.2009
(73) Patentinhaber: HILTI Aktiengesellschaft, 9494 Schaan (LI)
(72) Erfinder: Schmitzer, Harald, 8003 Zürich (CH); Hermann, Fritz, 86899, Landsberg (DE); Gonzalez, Rosa Maria, 15404, Ferrol (ES); Schierscher, Gabriel, 9494, Schaan (LI); Rosenkranz, Falk, 9658, Wildhaus (CH); Unverzagt, Stefan, 6800, Feldkirch (AT)
(74) Vertreter: Wildi, Roland

(56) Entgegenhaltungen:
- EP-A1- 0 742 404
- WO-A1-02/079682
- WO-A1-03/048626
- CH-A5- 630 160
- DE-A1- 4 213 893

## Beschreibung

Die Erfindung betrifft eine Rohrschelle mit zumindest einem eine Krümmung aufweisenden Schellenbügel, der einen krümmungsseitig innenliegenden Wandabschnitt aufweist, und mit zumindest zwei krümmungsseitig innenliegend angeordneten Auflageelementen für eine festzulegende Leitung, wobei die Auflageelemente umfänglich geschlossene Hohlprofile mit jeweils einem Hohlraum sind.

Eine gattungsgemässe Rohrschelle ist z. B. aus der WO 03/048626 A1 bekannt und dient der Fixierung und Halterung von Leitungen, wie z. B. von Rohren, Kabeln oder dergleichen, an einem Untergrund oder an einem Träger. Zur Isolierung der fixierten Leitung, wie z. B. zur Schallisolierung von Rohrleitungen gegenüber Gebäudeteilen werden Einlageelemente aus einem elastischen Material an dem Schellenbügel vorgesehen, welche gegen unerwünschte Verschiebung am Schellenbügel festgelegt sind.

Aus der CH 630 160 ist eine Rohrschelle mit zwei eine Krümmung aufweisenden Schellenbügeln, die jeweils einen krümmungsseitig innenliegenden Wandabschnitt aufweisen, und mit drei krümmungsseitig innenliegend angeordneten Auflageelementen für eine festzulegende Leitung bekannt. Die Auflageelemente sind über ein zumindest einen Randbereich des zumindest einen Schellenbügels übergreifendes Verbindungselement an dem zumindest einen Schellenbügel festgelegt. Die Auflageelemente sind entsprechend der Anorderungen an den Schellenbügeln festgelegt.

Für eine vorteilhafte Entkopplung insbesondere gegenüber Schall muss das Einlageelement aus einem möglichst federweichen Material gefertigt sein.

Nachteilig an der bekannten Art von Auflageelementen ist, dass das für die Einlageelemente verwendete Material eine Dämpfung aufweist, so dass sich dieses bei Kompression der Auflageelemente nicht wie eine ideale Feder verhält und eine optimale Entkopplung der festgelegten Leitung von der Rohrschelle behindert wird.

Die EP 0 742 404 A1 offenbart eine Rohrschelle mit elastischer Einlage, welche Hohlräume aufweist.

Aufgabe der Erfindung ist es, eine Rohrschelle mit zumindest einem Schellenbügel und mehreren Auflageelementen zu schaffen, die eine gute Entkopplung, insbesondere gegenüber Schall, gewährleisten.

Die Aufgabe ist durch die Merkmale der unabhängigen Ansprüche gelöst. Vorteilhafte Weiterbildungen sind in den Unteransprüchen dargelegt.

Eine erfindungsgemässe Rohrschelle ist dadurch gekennzeichnet, dass die Auflageelemente jeweils über ein einen Randbereich des zumindest einen Schellenbügels übergreifendes U-förmiges Verbindungselement an dem zumindest einen Schellenbügel festgelegt sind, welches in dem Hohlraum des jeweiligen Auflageelementes mit diesem in Anlage ist.

Gemäss der Erfindung sind die Auflageelemente umfänglich geschlossene Hohlprofile.

Ein Typ von Auflageelemente lässt sich an verschiedene Leitungsdurchmesser durch deren Verformbarkeit bei gleichzeitig vorteilhafter Entkopplung, insbesondere gegenüber Schall, anpassen. Jedes Auflageelement weist vorteilhaft eine geringe Federsteifigkeit auf, welche für eine vorteilhafte Entkopplung, insbesondere gegenüber Schall, der festgelegten Leitung zu dem zumindest einen Schellenkörper vorteilhaft ist. Bei einer Kompression der Auflageelemente verhält sich das Material über einen grossen Bereich wie eine ideale Feder, was eine optimale Entkopplung der in der Rohrschelle festgelegten Leitung gegenüber der Rohrschelle sicherstellt.

Mittels des Verbindungselementes sind die Auflageelemente an einer beliebigen Position entlang des zumindest einen Schellenbügels an diesem festlegbar, wobei jedes Auflageelement vorteilhaft einfach lösbar an dem zumindest einen Schellenbügel gehalten ist. Weiter vorteilhaft sind die Auflageelemente im festgelegten Zustand entlang der Krümmung des zumindest einen Schellenbügels weiterhin verschiebbar, um diese bedarfsweise leicht ausrichten zu können. Unter Randbereich des zumindest einen Schellenbügels wird der Bereich des zumindest einen Schellenbügels verstanden, der die Ausdehnung des zumindest einen Schellenbügels in eine Richtung quer zur Krümmung beziehungsweise quer zur Umfangsrichtung des zumindest einen Schellenbügels begrenzt.

Mindestens zwei, vorteilhaft drei oder mehr Auflageelemente sind an dem zumindest einen Schellenbügel vorgesehen, welche die festzulegende Leitung in der Rohrschelle fixieren. Bei grossen Rohrschellen oder bei schweren Leitungen werden entsprechend mehr Auflageelemente abhängig der auftretenden Belastung an dem zumindest einen Schellenbügel angeordnet.

Vorteilhaft ist das Auflageelement aus einem vorteilhaft extrudierten Endlosprofil gefertigt, das entsprechend abgelängt wurde. Vorteilhaft ist das Auflageelement aus Ethylen-Propylen-Dien-Kautschuk (EPDM) hergestellt.

Vorzugsweise sind die Hohlprofile quer zur Umfangsrichtung des zumindest einen Schellenbügels ausgerichtet, so dass die Haupterstreckung des umschlossenen Hohlraums parallel zu der Längsachse der festzulegenden Leitung verläuft.

Bevorzugt sind die Hohlprofile hohlzylindrisch, was eine vorteilhafte Entkopplung, insbesondere gegenüber Schall, der in der Rohrschelle festgelegten Leitung gegenüber dem zumindest einen Schellenbügel auch bei einer Kompression der Auflageelemente gewährleistet.

Vorzugsweise weisen die Auflageelemente eine ebene beziehungsweise gerade Anlagefläche zur Anlage an dem krümmungsseitig innenliegenden Wandabschnitt des zumindest einen Schellenbügels auf. Die Anlagefläche verhindert ein Abrollen des Auflageelementes z. B. um das Verbindungselement, wenn beispielsweise eine in der Rohrschelle montierte Leitung um ihre Längsachse gedreht wird.

Bevorzugt sind die Auflageelemente gleichmässig beabstandet verteilt zueinander an dem zumindest einen Schellenbügel angeordnet. Die Auflageelemente sind somit in einem gleichen Winkel bezogen auf das durch die Krümmung des zumindest einen Schellenbügels bestimmte Zentrum (= Zentrumswinkel) angeordnet.

In einer Variante dazu können auch mehrere Auflageelemente direkt benachbart zueinander zu Gruppen zusammengefasst und diese Gruppen bedarfsweise an dem zumindest einen Schellenbügel angeordnet werden. Beispielsweise bei schweren Leitungen können so im Bereich der hohen Lasten mehr Auflageelemente als in den übrigen Bereichen des zumindest einen Schellenbügels vorgesehen werden, in denen die Auflageelemente im Wesentlichen nur der Ausrichtung der festzulegenden Leitung in der Rohrschelle dienen. Weiter können auch mehrere Auflageelemente miteinander verbunden sein, wobei diese mit nur einem Halteelement an dem zumindest einen Schellenbügel fixiert werden.

Die Erfindung wird nachstehend anhand von einem Ausführungsbeispiel näher erläutert. Es zeigen:
- Fig. 1: Eine erfindungsgemässe Rohrschelle in Seitenansicht; und
- Fig. 2: ein an einem Schellenbügel festgelegtes Auflageelement im Schnitt entlang Linie II-II in Fig. 1.

Grundsätzlich sind in den Figuren gleiche Teile mit den gleichen Bezugszeichen versehen.

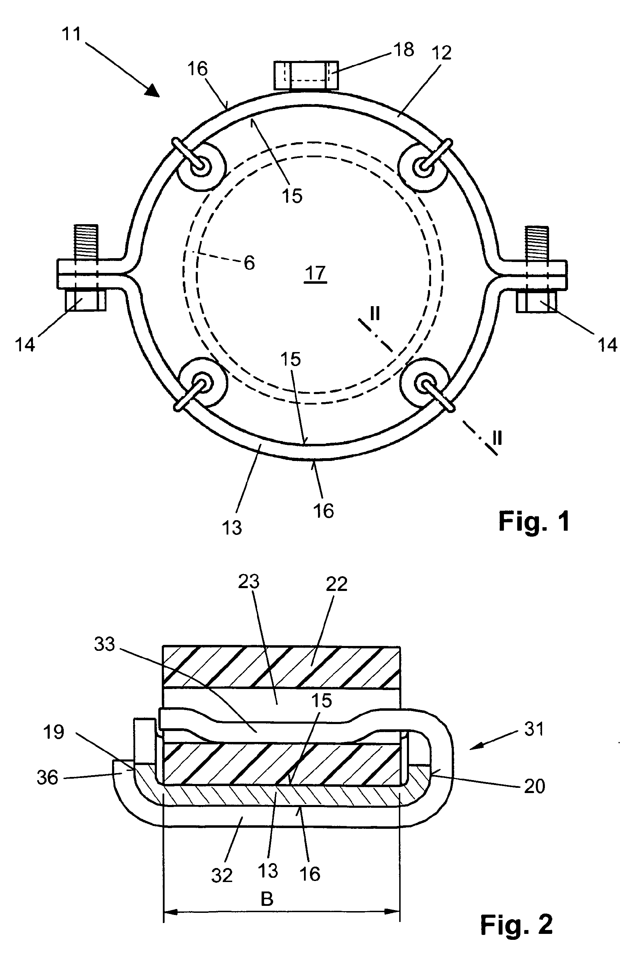

Die in den Figuren 1 und 2 dargestellte Rohrschelle 11 weist zwei Schellenbügel 12 und 13 auf, die über zwei Schrauben 14 miteinander verbindbar sind. Die Schellenbügel 12 und 13 weisen jeweils eine Krümmung mit einem krümmungsseitig innenliegenden Wandabschnitt 15 und mit einem krümmungsseitig aussenliegenden Wandabschnitt 16 auf, wobei die krümmungsseitig innenliegenden Wandabschnitte 15 einen Aufnahmeraum 17 für eine Leitung 6 begrenzen. An dem einen Schellenbügel 12 ist ein Anschlusskopf 18 für ein Befestigungselement zur Festlegung der Rohrschelle 11 an einem Untergrund vorgesehen.

Weiter weist die Rohrschelle 11 vier Auflageelemente 22 für die festzulegende Leitung 6 auf, wobei die Auflageelemente 22 umfänglich geschlossene Hohlprofile sind und über ein einen der Randbereiche 20 des Schellenbügels 12 bzw. 13 übergreifendes Verbindungselement 31 lösbar festgelegt sind. Die Auflageelemente 22 sind gleichmässig beabstandet verteilt zueinander an den Schellenbügeln 12 und 13 angeordnet.

Das Verbindungselement 31 ist U-förmig mit einem ersten Halteabschnitt 32 und einem zweiten Halteabschnitt 33 ausgebildet und aus einem Federstahl gefertigt. Der erste Halteabschnitt 32 verläuft vorteilhaft im Wesentlichen parallel zu dem zweiten Halteabschnitt 33. Im festgelegten Zustand des Auflageelementes 22 ist der erste Halteabschnitt 32 mit dem krümmungsseitig aussenliegenden Wandabschnitt 16 des Schellenbügels 12 bzw. 13 und der zweite Halteabschnitt 33 in dem Hohlraum 23 des Auflageelementes 22 mit diesem in Anlage.

Das Auflageelement 22 wird an der gewünschten Stelle an dem Schellenbügel 12 bzw. 13 positioniert und z. B. durch Aufschieben des Verbindungselementes 31 auf einen ersten Randbereich 20 des Schellenbügels 12 bzw. 13 an diesem fixiert. Der Verbindungsabschnitt beziehungsweise die Abbiegung zwischen dem ersten Halteabschnitt 32 und dem zweiten Halteabschnitt 33 bildet dabei einen Anschlag bei der Anordnung des Verbindungselementes 31 an dem Schellenbügel 12 bzw. 13 aus. Jedes Auflageelement 22 ist klemmend aber lösbar an dem Schellenbügel 12 bzw. 13 gehalten.

An dem freien Ende des ersten Halteabschnitts 32 des Verbindungselementes 31 ist ein Hintergreifabschnitt 36 zum seitlichen Umgreifen eines zweien Randbereichs 19 des Schellenbügels 13 vorgesehen, wobei der Hintergreifabschnitt 36 vom freien Ende des Halteabschnitts 32 abragend dem anderen Halteabschnitt 33 zugewandt ist. Dieses Verbindungselement 31 gewährleistet eine sichere Fixierung des Auflageelementes 22 an dem Schellenbügel 12 bzw. 13.

Das Auflageelement 22 ist aus einem extrudierten Endlosprofil gefertigt und wurde auf die für die Aufnahme des Auflageelementes 22 zur Verfügung stehenden Breite B des Schellenbügels 12 bzw. 13 abgelängt. Das Auflageelement 22 weist eine ebene, gerade Anlagefläche zur Anlage an dem krümmungsseitig innenliegenden Wandabschnitt 15 des Schellenbügels 12 bzw. 13 auf.

## Patentansprüche

1. Rohrschelle mit zumindest einem eine Krümmung aufweisenden Schellenbügel (12, 13), der einen krümmungsseitig innenliegenden Wandabschnitt (15) aufweist, und mit zumindest zwei krümmungsseitig innenliegend angeordneten Auflageelementen (22) für eine festzulegende Leitung (6), wobei die Auflageelemente (22) umfänglich geschlossene Hohlprofile mit jeweils einem Hohlraum (23) sind,
**dadurch gekennzeichnet, dass**
die Auflageelemente (22) jeweils über ein einen Randbereich (20) des zumindest einen Schellenbügels (12, 13) übergreifendes U-förmiges Verbindungselement (31) an dem zumindest einen Schellenbügel (12, 13) festgelegt sind, welches in dem Hohlraum (23) des jeweiligen Auflageelementes (22) mit diesem in Anlage ist.

2. Rohrschelle nach Anspruch 1, **dadurch gekennzeichnet, dass** die Hohlprofile quer zur Umfangsrichtung des zumindest einen Schellenbügels (12, 13) ausgerichtet sind.

3. Rohrschelle nach Anspruch 1 oder 2, **dadurch gekennzeichnet, dass** die Hohlprofile hohlzylindrisch sind.

4. Rohrschelle nach einem der Ansprüche 1 bis 3, **dadurch gekennzeichnet, dass** die Auflageelemente (22) eine ebene Anlagefläche zur Anlage an dem krümmungsseitig innenliegenden Wandabschnitt (15) des zumindest einen Schellenbügels (12, 13) aufweisen.

5. Rohrschelle nach einem der Ansprüche 1 bis 4, **dadurch gekennzeichnet, dass** die Auflageelemente (22) gleichmässig beabstandet verteilt zueinander an dem zumindest einen Schellenbügel (12, 13) angeordnet sind.

6. Rohrschelle nach einem der Ansprüche 1 bis 4, **dadurch gekennzeichnet, dass** die Auflageelemente (22) aus einem Ethylen-Propylen-Dien-Kautschuk (EPDM) hergestellt sind.

## Claims

1. Pipe clamp comprising at least one clamp hoop(12, 13) which has a curvature and which comprises a wall section (15) lying internally on the curved side and which has at least two supporting elements (22) lying internally on the curved side for a conduit (6) which is to be fixed, wherein the supporting elements (22) are peripherally closed hollow profiles, each having a hollow space (23), **characterised in that** the supporting elements (22) are each fixed to the at least one clamp hoop(12, 13) via a U-shaped connecting element (31) which grasps an edge region (20) of the at least one clamp hoop(12, 13), said connecting element being in contact with the respective supporting element (22) in the hollow space (23) of said supporting element (22).

2. Pipe clamp according to claim 1, **characterised in that** the hollow profiles are oriented transversely to the peripheral direction of the at least one clamp hoop(12, 13).

3. Pipe clamp according to claim 1 or 2, **characterised in that** the hollow profiles are hollow cylindrical profiles.

4. Pipe clamp according to one of the claims 1 to 3, **characterised in that** the supporting elements (22) have a planar contact surface for contact with the wall section (15) of the at least one clamp hoop(12, 13) lying internally on the curved side.

5. Pipe clamp according to one of the claims 1 to 4, **characterised in that** the supporting elements (22) are distributed equally spaced from one another on the at least one clamp hoop(12, 13).

6. Pipe clamp according to one of the claims 1 to 4, **characterised in that** the supporting elements (22) are made from an ethylene propylene diene rubber (EPDM).

## Revendications

1. Collier pour tuyau comprenant au moins une bride de collier (12, 13) présentant une courbure, laquelle bride de collier comporte une partie de paroi (15) située à l'intérieur côté courbure, et au moins deux éléments de support (22) pour une conduite à fixer (6), agencés à l'intérieur côté courbure, les éléments de support (22) étant des profilés creux fermés de manière circonférentielle ayant chacun une cavité (23),
**caractérisé en ce que**
les éléments de support (22) sont respectivement fixés sur la au moins une bride de collier (12, 13) par un élément de liaison en forme de U (31) couvrant une région de bord (20) de la au moins une bride de collier (12, 13), laquelle bride de collier dans la cavité (23) de chaque élément de support (22) est en contact avec celui-ci.

2. Collier pour tuyau selon la revendication 1, **caractérisé en ce que** les profilés creux sont alignés perpendiculairement à une direction circonférentielle de la au moins une bride de collier (12, 13).

3. Collier pour tuyau selon la revendication 1 ou 2, **caractérisé en ce que** les profilés creux sont cylindriques.

4. Collier pour tuyau selon l'une quelconque des revendications 1 à 3, **caractérisé en ce que** les éléments de support (22) comportent une surface de contact plane pour venir en contact avec la partie de paroi (15) située à l'intérieur côté courbure, de la au moins une bride de collier (12, 13).

5. Collier pour tuyau selon l'une quelconque des revendications 1 à 4, **caractérisé en ce que** les éléments de support (22) sont agencés de manière équidistante les uns par rapport aux autres sur la au moins une bride de collier (12, 13).

6. Collier pour tuyau selon l'une quelconque des revendications 1 à 4, **caractérisé en ce que** les éléments de support (22) sont fabriqués à partir d'un caoutchouc éthylène-propylène-diène (EPDM).
